# EUROPÄISCHE PATENTSCHRIFT

(11) **EP 0 981 960 B1**
(45) Veröffentlichungstag und Bekanntmachung des Hinweises auf die Patenterteilung: **02.07.2003**
(21) Anmeldenummer: 99115944.3
(22) Anmeldetag: 13.08.1999
(51) Int. Cl.: A01N 59/26

(54) **Verfahren und Vorrichtung zur Verdünnung von Phosphorwasserstoff mit Luft ohne Entzündungsgefahr**
Process and apparatus for the dilution of phosphine with air without risk of ignition
Procédé et dispositif pour la dilution de la phosphine sans risque d'allumage

(30) Priorität: 28.08.1998 DE 19839385
(43) Veröffentlichungstag der Anmeldung: 01.03.2000
(73) Patentinhaber: Horn, Pedro Miguel, Santiago (CL)
(72) Erfinder: Horn, Pedro Miguel, Santiago (CL)
(74) Vertreter: Ratzel, Gerhard, Dr.

(56) Entgegenhaltungen:
- EP-A- 0 747 319
- WO-A-93/25075
- DE-A- 3 707 453
- GB-A- 2 177 004
- US-A- 5 353 544

## Beschreibung

Phosphorwasserstoff (Formel PH₃) wird sein über 50 Jahren zur Schädlingsbekämpfung und zur Schädlingsprophylaxe beim Vorratsschutz insbesondere bei Futtermitteln und Lebensmitteln eingesetzt.

Der Phosphorwasserstoff hat einige hervorzuhebende Eigenschaften, welche von großer Wichtigkeit für die moderne Schädlingsbekämpfung sind.

So ist zum Beispiel der Phosphorwasserstoff in Wasser, Öl und Fett nur sehr wenig löslich und wird so von den meisten Lebensmitteln kaum absorbiert.

Er reagiert auch nicht mit den behandelten Lebensmitteln, so dass diese nach der Behandlung fast keine Rückstände enthalten.

Da Phosphorwasserstoff grundsätzlich sehr wenig löslich ist und ein ähnliches spezifisches Gewicht wie Luft hat, kann er leicht in großen Lagern gleichmäßig verteilt werden.

Wenn nach einer Behandlung gelüftet wird, wird Phosphorwasserstoff durch die UV-Strahlung in Gegenwart von Luft rasch zu Phosphorsäure oxidiert, so dass sich keine umweltbelastenden Verbindungen bilden.

Zusätzlich kann hier erwähnt werden, dass in den letzten Jahren festgestellt wurde, dass sich Phosphorwasserstoff auch spontan in der Natur bildet.

Andererseits bringt aber die vorgenannte Behandlung mit Phosphorwasserstoff auch Probleme mit sich. Er bildet mit Luft ein leicht entzündbares Gasgemisch. Die Zündgrenze für dieses Gasgemisch ist 1,8 % Phosphorwasserstoff-Konzentration. Wird diese Grenze überschritten, dann hat der Phosphorwasserstoff auch noch die Tendenz zur Selbstentzündung.

Allerdings werden bei der Schädlingsbekämpfung keine hohen Konzentrationen gebraucht. Eine erfolgreiche Behandlung wird schon mit 200 bis 300 ppm erzielt, so dass eigentlich bei der Schädlingsbekämpfung keine Zündgefahr bestehen sollte. Es kann aber trotzdem nicht verhindert werden, dass unter bestimmten Bedingungen manchmal erhöhte Konzentrationen auftreten und es zur Selbstentzündung kommen kann

Die Fachwelt hat sich schon sehr viele Gedanken gemacht, wie man diese Gefahren verhindern kann. Um Phosphorwasserstoff gefahrlos anwenden zu können, hat man z.B. paraffiniertes Aluminiumphosphid (AIP) mit Ammoniumcarbamat zu Tabletten gepresst. Diese Tabletten werden sodann der Luftfeuchtigkeit ausgesetzt, wobei das AIP langsam zu PH₃ und AIOOH hydrolisiert. Der Phosphorwasserstoff wird sofort mit der umgebenen Luft verdünnt, so dass es zu keiner Entzündung kommen kann. Leider enthält jedoch der feste Rückstand immer noch 1-3 % an unreagiertem AIP.

Später wurden auch Magnesiumphosphid Mg₃P₂-Präparate hergestellt, welche mit der Feuchtigkeit in der Luft fast vollkommen reagieren, so dass die Rückstände nur wenig Gift enthalten.

Bei allen festen Darbietungsformen, die mit der Luftfeuchtigkeit reagieren, um Phosphorwasserstoff zu bilden, kann, nach Ausbringen die Hydrolyse nicht mehr unterbrochen werden. Außerdem müssen die Tabletten dermaßen verteilt werden, dass es zu keinen Anhäufungen kommt. Heutzutage versucht man nun mit Stickstoff oder CO₂ verdünnten Phosphorwasserstoff direkt zur Begasung einzusetzen. Hierbei muss allerdings sehr verdünntes Gas verwendet werden, um die Zündgrenze nicht zu überschreiten. Das Gas wird sodann durch die Leitungen zu den Begasungsobjekten geleitet. Dadurch ist es möglich, die Zufuhr von Gas jederzeit zu unterbrechen und das Objekt zu lüften. Der Nachteil dieser Methode ist die große Menge von Stahlzylindern mit verdünntem Phosphorwasserstoff, die bei der Anwendung transportiert werden müssen, so dass die Anwendung sehr umständlich wird.

Es wurde ferner ein Generator entwickelt, bei dem von Mg₃P₂ ausgehend, ein Luft-Phosphorwassergemisch hergestellt wird. Leider kann auch bei diesem Generator nicht verhindert werden, dass unter bestimmten Umständen die Zündgrenze überschritten wird, so dass es zur Selbstentzündung kommen kann.

Daher ist es empfehlenswert, reinen Phosphorwasserstoff aus der Druckflasche direkt mit Luft bis unter die Zündgrenze zu verdünnen, und das Luft-Gasgemisch für die Schädlingsbekämpfung einzusetzen, wodurch die Transportkosten stark vermindert werden und die Begasung mit viel weniger Aufwand durchgeführt werden könnte.

Bei den normalen Verdünnungsprozessen kann jedoch eine Entzündung leider nicht ausgeschlossen werden; wenn Phosphorwasserstoff einmal angefangen hat in der Luft zu brennen, kann die Flamme nur sehr schwer gelöscht werden.

Es hat also bis jetzt noch kein Verfahren gegeben, das Phosphorwasserstoff direkt mit Luft zu mischen vermag, ohne dass es zu einer Zündgefahr kommt.

Es wurde vom Erfinder weiterhin festgestellt, dass mit Di- und Polyphosphin verunreinigter Phosphorwasserstoff mehr zur Selbstentzündung neigt, als reiner, aus Mg₃P₂ hergestellter Phosphorwasserstoff.

Zum nächstkommenden Stand der Technik ist ferner die bekannt gemachte Europäische Patentanmeldung 0747319 zu nennen, die ein Verfahren und eine Vorrichtung zur Herstellung einer Mischung von Phosphin und einem Verdünnungsgas beschreibt. Dabei wird ein hydrolisierfähiges Metallphosphid, vorzugsweise Magnesiumphosphid, direkt in flüssiges Wasser unter einer Atmosphäre eines Gases, das gegenüber Phosphin inert ist, eingegeben, wobei das Metallphosphid aus frei fließfähigen Partikeln besteht. Die erzielte Mischung aus Phosphin Metallphosphid aus frei fließfähigen Partikeln besteht. Die erzielte Mischung aus Phosphin und inertem Trägergas, das beispielsweise aus Kohlendioxyd besteht, kann als solches oder nach der Verdünnung mit einem Verdünnungsgas in einer Verdünnungskammer mit Luft verwendet werden, nachdem eine Konzentration unterhalb der Entzündungsgrenze geschaffen wurde, wobei als Verwendungsart eine Begasung genannt ist. Wenn man als Trägergas Argon bezüglich der Phosphinmischung verwendet, ist eine Verwendung bei der Halbleiterherstellung möglich.

Im Gegensatz zum Gegenstand vorliegender Erfindung beschreibt also die EP 0747319 die Herstellung einer Mischung von Phosphin aus Metallphosphid durch Hydrolyse in Anwesenheit eines Verdünnungsgases.

Der grundsätzliche Unterschied zwischen vorliegender Erfindung und dem Gegenstand der EP 0747319 besteht darin, dass bei dem bekannten Verfahren des Standes der Technik durch kontrollierte Hydrolyse ein Phosphorwasserstoff- Luft-Gemisch hergestellt wird, das die unterste Explosionsgrenze nicht überschreiten darf.

Der vorliegenden Erfindung liegt die Aufgabe zugrunde, ein Verfahren zu finden, wobei eine Direktmischung von PH₃ mit Luft ohne Zündgefahr stattfindet.

Überraschenderweise wurde nun gefunden, dass bei einer Vermischung von Phosphorwasserstoff und Luft unter Wasser, eine Selbstentzündung ganz unterbunden wird. Hierbei kann jedes beliebige Verhältnis problemlos erreicht werden. Wird der Phosphorwasserstoff bis unter die Zündgrenze verdünnt, so lässt sich die Mischung über dem Wasser auch mit einem Brenner nicht entzünden. Wird am Mischpunkt unter Wasser, durch punktförmiges Erhitzen das Gasgemisch entzündet, so brennt das Gasgemisch am Mischpunkt nur, solange die Zündquelle gegenwärtig ist. Kaum wird die Zündquelle entfernt, wird die Flamme vom Wasser abgerissen und sofort gelöscht.

Demzufolge bezieht sich also die vorliegende Erfindung auf eine Verfahren zur direkten Verdünnung von Phosphorwasserstoff mit Luft bis zu einer PH₃-Konzentration von maximal 1,8 %, wobei die Mischung unter Wasser durchgeführt wird und PH₃ durch eine Leitung unter der Wasserfläche eingeführt wird oder mit der Hilfe einer Wasserstrahlpumpe mit Wasser gemischt wird.

Bevorzugte Ausführungsformen der Erfindung sind Gegenstand der nichtselbständigen Ansprüche.

Dadurch ist es nun möglich, Phosphorwasserstoff direkt mit Luft in Gegenwart von Wasser zu mischen.

In einer zur Anwendung gelangenden Vorrichtung kann sowohl reines wie auch mit Frostschutzmittel gegen Einfrieren geschütztes Wasser verwendet werden. Es können ferner auch verdünnte anorganische Säuren und Laugen oder anorganische wässrige Salzlösungen verwendet werden.

Die Vorrichtung ist so gebaut worden, dass noch unter Wasser eine rasche Verdünnung von Phosphorwasserstoff mit Luft bewirkt wird, so dass das aus dem Wasser austretende Phosphin-Luft-Gemisch homogen ist.

Die einfachste Ausführungsform der Vorrichtung besteht aus einem senkrechten Rohr, das sich unter Wasser befindet und durch welches die Luft von unten eingeleitet wird. Diesem Rohr wird durch kleine Öffnungen an der Seite Phosphorwasserstoff zugeführt, so dass die Mischung immer unter der Zündgrenze bleibt.

Den gleichen Effekt kann man auch mit einer Wasserstrahlpumpe erzielen, bei der Phosphorwasserstoff in den Wasserstrahl eingeführt und die Luft vom Wasserstrahl angesaugt wird.

Eine bevorzugte Ausführungsform der zur Anwendung gelangenden Vorrichtung ist in der Lage, 100 m³ mit Luft verdünntem PH₃ innerhalb einer Stunde zu erzeugen. Dabei kann die Mischung problemlos bis zu 1,8 % Phosphorwasserstoff enthalten

Damit problemlos Phosphorwasserstoff mit Luft gemischt werden kann, werden vor der Anwendung alle phosphorwasserstoffführenden Leitungen mit CO₂, Stickstoff oder einem anderen Inertgas gespült. Anschließend wird ein Gebläse für die Luft eingeschaltet. Es muss dabei der Luftstrom vorzugsweise überwacht werden, so dass ein Ausfallen der zur Verdünnung nötigen Luft sofort festgestellt werden kann. Ist eine geeignete Luftmenge abgesichert und genug Wasser in der Vorrichtung vorhanden, kann der Phosphorwasserstoff zugeführt werden.

Sollte ein Störfall, wie verstopfte Leitungen, Stromausfall oder Überfluss an Phosphorwasserstoff auftreten, so wird die Phosphorwasserstoffzufuhr automatisch unterbrochen und alle Leitungen sofort mit Inertgas gespült.

Es können mit diesem Verfahren gefahrlos Mischungen bis unterhalb der Zündgrenze hergestellt werden: Dieses ist aber bei normalen Begasungsbedingungen nicht nötig, da hierfür viel geringere Konzentrationen ausreichend ist. So werden für Begasungszwecke vorzugsweise Konzentrationen von 0,18 % verwendet.

Um den Betrieb der Vorrichtung abzustellen, wird zuerst die Phosphorwasserstoffzufuhr unterbrochen und danach die Leitungen wieder mit Inertgas gespült. Erst dann ist das Gebläse abzuschalten.

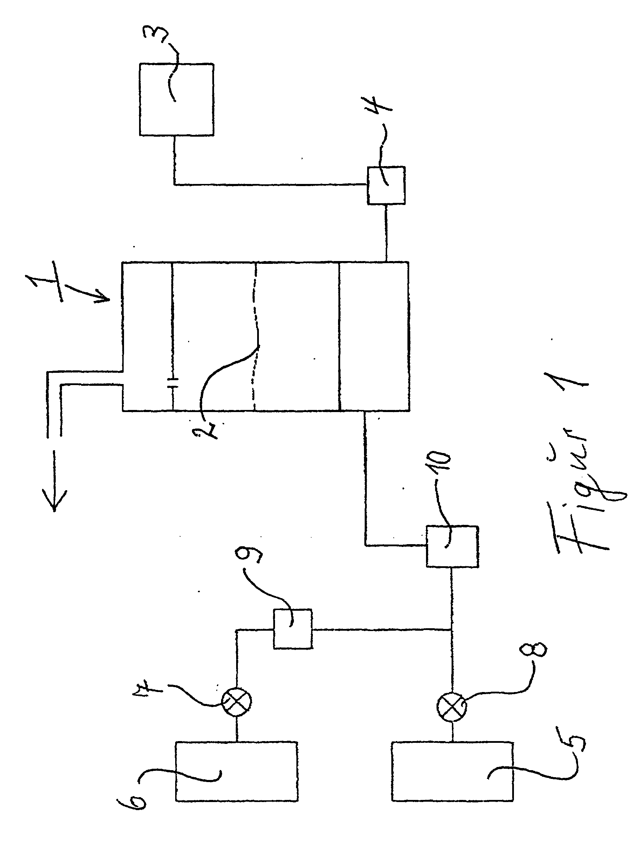

In der beiliegenden Figur 1 ist ein Verfahrensschema bezüglich einer Durchführungsart des erfindungsgemäßen Verfahrens dargestellt.

Mit der Bezugsziffer 1 ist der Wasserbehälter, mit 2 der Wasserstand, mit 3 das Luftgebläse, mit 4 ein Durchflussmesser, mit 5 der Phosphorwasserstoff-Vorrat, mit 6 ein Vorrat an Kohlendioxyd und/oder Stickstoff, mit 7 und 8 jeweils ein Ventil sowie mit 9 und 10 jeweils ein Durchflussmesser bezeichnet.

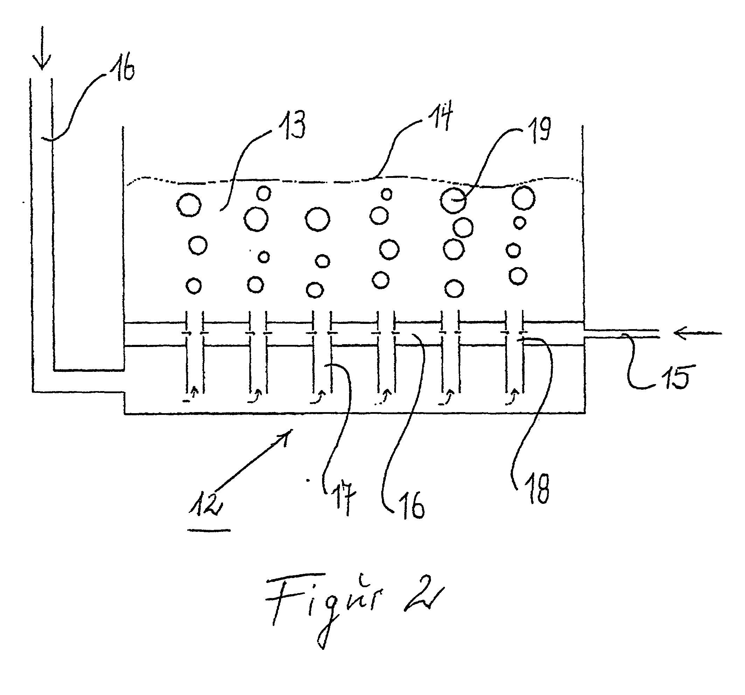

In Figur 2 ist eine bevorzugte Ausführungsform der anzuwendenden Vorrichtung dargestellt. Mit der Bezugsziffer 12 ist der Wasserbehälter, mit 13 die Wasserfüllung, mit 14 die Wasseroberfläche, mit 15 die Phosphorwasserstoff-Zuleitung und mit 16 die Luftzuleitung dargestellt. Die Phosphorwasserstoff-Zuleitung 15 mündet in eine Mischröhre 16, die von Luftzuleitungen 17 durchbrochen ist, die ihrerseits Phosphorwasserstoff Eintrittsstellen 18 aufweisen.

Alle diese Röhren sind durch den Druck der über ihnen stehenden Wassersäule 13 mit Wasser gefüllt; in ihnen findet der Vermischungsvorgang zwischen Luft- und Phosphorwasserstoff statt. Diese Gasmischungs-Anteile verlassen in Form von Perlen nach oben den Wasserbehälter 12.

In Figur 3 ist eine weitere Ausführungsform der anzuwendenden Vorrichtung dargestellt.

Der Wasserbehälter ist mit der Bezugsziffer 20, dessen Wasserinhalt mit 21, die Luftzuleitung mit 22, die Phosphorwasserstoff-Zuleitung mit 23 bezeichnet. Die Wasseroberfläche trägt die Bezugsziffer 24. Im oberen Bereich des Wasserbehälters befindet sich eine Scheidewand 25, in deren Bereich sich das Gasgemisch Luft/Phosphorwasserstoff ansammelt und über die Öffnung 26 abströmt. Mit der Bezugsziffer 27 ist ein Tropfabscheider in dem darüber liegenden Raum angeordnet, aus dem das Gasgemisch über die Ableitung 29 abströmt.

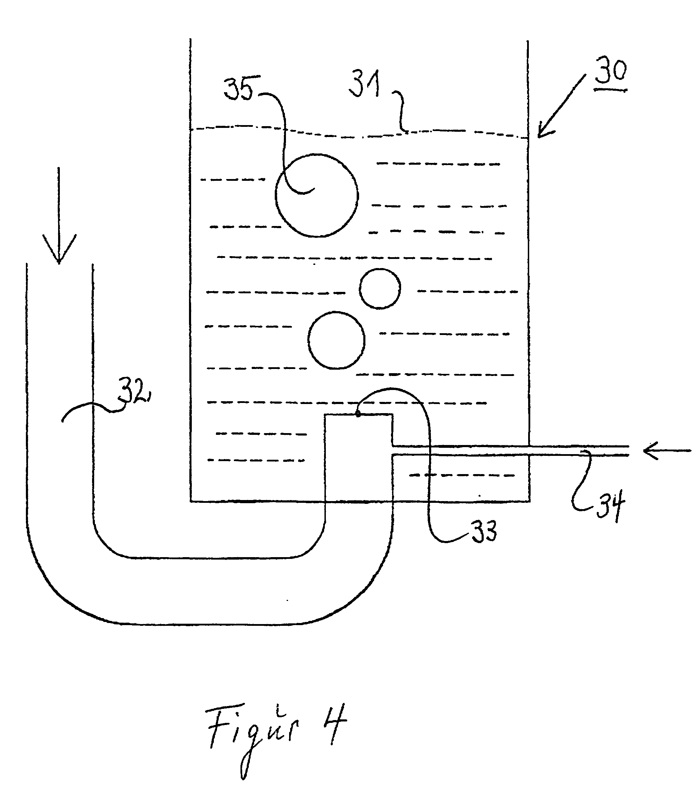

In Figur 4 ist eine weitere Ausführungsform der anzuwendenden Vorrichtung dargestellt.

Mit der Bezugsziffer 30 ist der Wasserbehälter, mit 31 die Wasseroberfläche bezeichnet.

Durch den Boden des Wasserbehälters 30 ist eine Luftzuleitung 32 in dessen Inneres geführt, die kurz vor ihrer Mündung 33 eine seitliche Zuführung 34 für den Phosphorwasserstoff aufweist. Hauptsächlich im Mündungsbereich 33 der Luftzuleitung findet die Vermischung bzw. Verwirbelung der Luft mit dem Phosphorwasserstoff statt mit anschließendem Austritt in die Wasserfüllung des Wasserbehälters 30. Vorzugsweise ist die Luftzuführung 32 bezüglich ihres Durchmessers mehrfach so groß dimensioniert, wie die Phosphorwasserstoff-Zuleitung 34.

In Folge des hydrostatischen Drucks der Wassersäule tritt das Wasser in den Mündungsbereich der Luftzuführung ein, so dass das erfindungsgemäße Verfahren in optimaler Weise durchführbar ist.

Mit der Bezugsziffer 35 sind die aufsteigenden Gasblasen des Gemisches Luft-Phosphorwasserstoff bezeichnet.

Das Wesen vorliegender Erfindung wird im folgenden in diesem Anwendungsbeispiel weiterhin erläutert.

### Anwendungsbeispiel

Ein Getreidesilo einer Nudelfabrik mit einer Höhe von 22 m und einem Durchmesser von 18,5 m, in dem 5000 Tonnen Getreide gelagert wurden, wurde mit einem Lutt-PH₃-Gemisch, das erfindungsgemäß hergestellt wurde, behandelt.

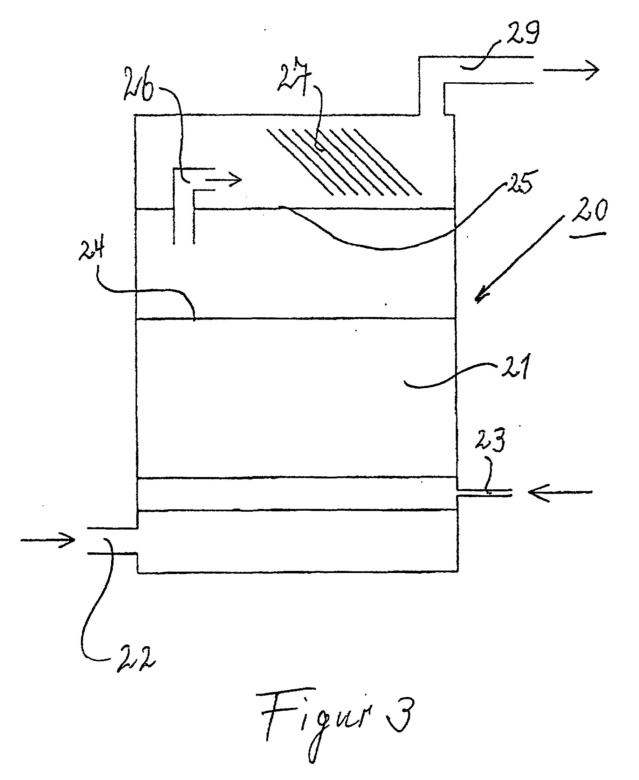

Dazu wurden 4.990 g PH₃ aus einer handelsüblichen Stahlflasche, in der nach Figur 3 angefertigten Apparatur, direkt mit Luft verdünnt.

Hierzu wurde ein Gebläse verwendet, welches 1.400 m³ Luft in der Stunde durch die Verdünnungsvorrichtung pumpte.

Während der Einlenkung des Gases ist das Silo oben offen, damit das Gas-Luft-Gemisch die Luft verdrängen und diese oben entweichen kann.

Der erste Schritt des Verfahrens war, mit dem Gebläse durch die Apparatur reine Luft von unten in das Silo zu leiten. So konnte man feststellen, dass es in den Leitungen, welche einen Durchmesser von 20 cm hatten, keinen erhöhten Widerstand gab. Vor Eintritt in das Getreide ist ein Überdruck von 3 cm Wassersäule festzustellen.

Nachdem nun die PH₃ führenden Leitungen mit CO₂ aus einer zweiten Stahlflasche gespült wurden, konnte erst der PH₃ durch die Verdünnungsvorrichtung in den Luftstrom geleitet werden.

In den ersten 2 Minuten wurden an einem Durchflussmesser 10 g pro Minute gemessen.

Danach wurde der Durchfluss auf 50 g pro Minute erhöht.

Nach weiteren 5 Minuten wurde die PH₃ Zufuhr auf 80 g pro Minute stabilisiert.

Nach einer Zeit von einer Stunde und 4 Minuten war im oberen Freiraum des Getreidesilos eine Konzentration von 50 ppm PH₃ festzustellen. Das Luft-PH₃-Gemisch verdrängt die sich in den Zwischenräumen der Körner befindende Luft, welche wie in einer chromatografischen Säule nach oben wanderte.

Nun wurde die PH₃ Zufuhr abgestellt und die PH₃ führenden Leitungen mit CO₂ freigespült. Nach einer weiteren Minute wurde auch das Gebläse abgestellt und das Silo oben und unten abgedichtet, damit das Gas einwirken konnte.

Während der Zudosierung wurden PH₃ Messungen in den Gas-Luft führenden Leitungen vorgenommen.

So konnten nach 3 Minuten Einleitungszeit 1.600 ppm PH₃ mit dem Dräger-Prüfröhrchen festgestellt werden.

Nach 10 Minuten hatte sich die Gaskonzentration auf 2.300 ppm PH₃ stabilisiert. Diese Konzentration konnte auch noch kurz vor dem Abstellen festgestellt werden.

Nach der Behandlung konnten unten im Getreide 2.200 ppm PH₃ festgestellt werden.

24 Stunden nach der Behandlung wurden im Getreide folgende Werte gemessen:
- oben, 1 m unter der Getreideoberfläche: 1.200 ppm PH₃
- unten, 1 m über dem Boden: 800 ppm PH₃

## Patentansprüche

1. Verfahren zur direkten Verdünnung von Phosphorwasserstoff mit Luft bis zu PH₃-Konzentrationen von maximal 1,8 %,
**dadurch gekennzeichnet,**
**dass** die Mischung unter Wasser durchgeführt wird, wobei PH₃ durch eine Leitung unter der Wasserfläche eingeführt wird, oder mit der Hilfe einer Wasserstrahlpumpe mit Wasser gemischt wird.

2. Verfahren nach Anspruch 1,
**dadurch gekennzeichnet,**
**dass** das Wasser Frostschutzmittel und/oder Korrossionsschutzmittel und/oder feuerhemmende Mittel enthält.

3. Verfahren nach Anspruch 2,
**dadurch gekennzeichnet,**
**dass** Wasser durch eine Vorrichtung gepumpt und dem Wasser Phosphorwasserstoff zugeführt wird.

4. Verfahren nach Anspruch 1 - 3,
**dadurch gekennzeichnet,**
**dass** der Phosphorwasserstoff durch Öffnungen lateral einem in Wasser stehendem Rohr zugeführt wird, durch welches die Luft geleitet wird.

5. Verfahren nach Anspruch 1 - 4,
**dadurch gekennzeichnet,**
**dass** das Gasgemisch die Vorrichtung durch eine Tropfabscheidvorrichtung verlässt, um zu verhindern, dass Wasser in die Gasleitungen gelangt.

6. Verfahren nach Anspruch 1 - 5,
**dadurch gekennzeichnet,**
**dass** das Verfahren elektronisch überwacht wird.

7. Verfahren nach Anspruch 1 - 6,
**dadurch gekennzeichnet,**
**dass** das Wasser freie Wasserstoff-Ionen enthält und mithin als Säure zu definieren ist.

8. Verfahren nach Anspruch 1 - 6,
**dadurch gekennzeichnet,**
**dass** das Wasser freie Hydroxyl-Ionen enthält und mithin als Lauge zu definieren ist.

9. Verfahren nach Anspruch 1 - 6,
**dadurch gekennzeichnet,**
**dass** das Wasser metallische Kationen und nichtmetallische Anionen enthält und mithin einen Salzanteil aufweist.

## Claims

1. Process for the direct dilution of phosphine with air resulting in PH₃ concentrations of up to 1.8 percent,
**characterised in that** the mixing process takes place under water whereby PH₃ is added using an under water pipe or is mixed with water by means of a water-jet pump.

2. Process according to claim 1,
**characterised in that** the water contains anti-freeze and/or anticorrosive agents and/or fire-retardant agents.

3. Process according to claim 2,
**characterised in that** water is pumped through a device and phosphine is added to the water.

4. Process according to claim 1- 3,
**characterised in that**, via lateral openings, phosphine is fed into a tube, which is positioned in water and through which air is being directed.

5. Process according to claim 1 - 4,
**characterised in that** the gas mixture leaves the device through a dropping funnel in order to prevent water from entering the gas pipe.

6. Process according to claim 1 - 5,
**characterised in that** the process is monitored electronically.

7. Process according to claim 1- 6,
**characterised in that** the water contains free hydrogen ions and must therefore be defined as an acid.

8. Process according to claim 1- 6,
**characterised in that** the water contains free hydroxyl ions and must therefore be defined as a lye.

9. Process according to claim 1 - 6,
**characterised in that** the water contains metallic cations and non-metallic anions, which means that it retains a certain amount of salt.

## Revendications

1. Procédé de dilution directe de phosphine par air conduisant à des concentrations de PH₃ jusqu'à un maximum de 1,8 pour cent,
**caractérisé en ce que** le mélange se fait sous l'eau, c'est-à-dire que le PH₃ est amené par une conduite sous la surface de l'eau ou est mélangé à l'eau par un éjecteur à eau.

2. Procédé selon la revendication 1,
**caractérisé en ce que** l'eau contient de l'antigel et/ou des agents anti-corrosifs et/où des agents résistant au feu.

3. Procédé selon la revendication 2,
**caractérisé en ce que** l'eau est pompée par un dispositif et alimentée en phosphine.

4. Procédé selon la revendication 1- 3,
**caractérisé en ce que** la phosphine est alimentée latéralement par des ouvertures dans un tuyau qui se trouve dans l'eau et dans lequel l'air est conduit.

5. Procédé selon la revendication 1- 4,
**caractérisé en ce que** le mélange gazeux sort du dispositif par un pare-gouttes pour empêcher l'eau d'entrer dans les tuyaux de gaz.

6. Procédé selon la revendication 1- 5,
**caractérisé en ce que** le procédé est sous surveillance électronique.

7. Procédé selon la revendication 1- 6,
**caractérisé en ce que** l'eau contient des ions hydronium libres et doit donc être définie comme acide.

8. Procédé selon la revendication 1- 6,
**caractérisé en ce que** l'eau contient des ions hydroxyles et doit donc être définie comme lessive alcaline.

9. Procédé selon la revendication 1- 6,
**caractérisé en ce que** l'eau contient des cations métalliques et des anions non-métalliques, c'est-à-dire qu'il contient un certain pourcentage de sel.
